Europäisches Patentamt

European Patent Office

Office européen des brevets

(11) Veröffentlichungsnummer: **0 353 572**
**A2**

## (12) EUROPÄISCHE PATENTANMELDUNG

(21) Anmeldenummer: **89113506.3**

(22) Anmeldetag: **22.07.89**

(51) Int. Cl.⁴: **C08G 18/10 , C08G 18/78**

(30) Priorität: **04.08.88 DE 3826447**

(43) Veröffentlichungstag der Anmeldung:
**07.02.90 Patentblatt 90/06**

(84) Benannte Vertragsstaaten:
**BE CH DE ES FR GB IT LI NL SE**

(71) Anmelder: **BAYER AG**

**D-5090 Leverkusen 1 Bayerwerk(DE)**

(72) Erfinder: **Kopp, Richard, Dr.**
**Bilharzstrasse 15**
**D-5000 Koeln 80(DE)**
Erfinder: **Grögler, Gerhard, Dr.**
**von-Diergardt-Strasse 48**
**D-5090 Leverkusen 1(DE)**
Erfinder: **Hess, Heinrich, Dr.**
**Auf der Schildwache 13a**
**D-5000 Koeln 80(DE)**

(54) **Mit langkettigen Komponenten modifizierte, Harnstoffgruppen enthaltende Polyisocyanate.**

(57) Die vorliegende Erfindung betrifft neuartige, mit langkettigen Komponenten eines Molekulargewichts von 400 - 10.000 modifizierte, Harnstoffgruppen enthaltende Polyisocyanate, die pro 100 g bis zu 40 g der langkettigen Komponenten enthalten. Die langkettigen Komponenten sind insbesondere Polyether und/oder Polyester.

EP 0 353 572 A2

**Mit langkettigen Komponenten modifizierte, Harnstoffgruppen enthaltende Polyisocyanate**

Die vorliegende Erfindung betrifft neuartige, mit langkettigen Komponenten eines Molekulargewichts von 400-10.000 modifizierte, Harnstoffgruppen enthaltende Polyisocyanate, die pro 100 g bis zu 40 g der langkettigen Komponenten enthalten.

Harnstoffgruppen enthaltende Polyisocyanate sind bekannt und Stand der Technik. Insbesondere das aus 2 Mol 2,4-Toluylendiisocyanat und 1 Mol Wasser hergestellte Diisocyanat ist in verschiedenen Polyurethansystemen eingesetzt worden (s. US 4 035 467, US 2 818 404, DE 3 230 757, DE 3 403 498). Das Harnstoffdiisocyanat aus 2 Mol 2,6-Toluylendiisocynat und 1 Mol Wasser ist eine ebenfalls bekannte Verbindung (s. US 2 902 474).

Die Herstellung dieser im allgemeinen als höher schmelzende Feststoffe vorliegende Verbindungen erfolgt vorzugsweise durch Umsetzung der Harnstoffgruppen-freien Ausgangspolyisocyanate mit Wasser, wobei für diese Reaktion verschiedene Verfahrensweisen bekannt und geschützt sind (s. US 2 757 184, US 3 906 019, DE 3 438 527, DE 3 638 148).

Die nach diesen Verfahren hergestellten, Harnstoffgruppen enthaltenden Polyisocynate finden in letzter Zeit ein großes Interesse als feste Isocyanatkomponenten für heterogene Einkomponentensysteme auf Basis von festen Polyisocynaten und flüssigen oder festen NCO-reaktiven Verbindungen. In diesen Systemen liegen Polyisocynate und NCO-reaktive Verbindungen bei niedrigen Temperaturen als getrennte, nur sehr langsam miteinander reagierende Phasen nebeneinander, die erst bei höheren Temperaturen soweit verträglich werden, daß eine vollständige Reaktion miteinander erfolgt. Durch oberflächliche Desaktivierung des Polycyanates kann sogar eine völlige Lagerstabilittät dieser Systeme erreicht werden (DE 3 230 757 = EP 103 323, DE 3 403 500 = EP 150 790).

Beim Einsatz der Harnstoffgruppen enthaltenden Polyisocyanate, insbesondere der nach dem sogenannten "Wasserverfahren" (DE 3 230 757, DE 3 638 148) hergestellten Produkte, als Isocyanatkomponente in solchen heterogenen Einkomponentensystemen, die relativ niedermolekulare NCO-reaktive Komponenten als Reaktionspartner enthalten, stellt man fest, daß die ausgehärteten Endprodukte nicht das Eigenschaftsniveau erreichen, welches Produkte aufweisen, die aus denselben Ausgangskomponenten aber nach anderen Verfahren (z.B. durch Gießen einer Lösung, die durch Umsetzung der Ausgangskomponenten in einem geeigneten Lösungsmittel erhalten wurde) hergestellt wurden.

Das heißt, die Umsetzung der Komponenten des heterogenen Systems verläuft nicht quantitativ zu einem homogenen Endprodukt, sondern bleibt auf einem niedrigen Niveau stehen.

Es wurde nun überraschenderweise gefunden, daß dieses Problem gelöst werden kann, wenn die Harnstoffgruppen aufweisenden Polyisocyanate durch langkettige Komponenten modifiziert werden.

Gegenstand der Erfindung sind somit neuartige, mit langkettigen Komponenten eines Molekulargewichts von 400 -10.000 modifizierte, Harnstoffgruppen enthaltende Polyisocyanate, die pro 100 g bis zu 40´g der langkettigen Komponente enthalten.

Zur Herstellung der neuen Produkte wird vorzugsweise das Verfahren der Umsetzung des Basisisocyanates mit Wasser gewählt, wobei diese Reaktion sowohl in einem inerten Lösungsmittel (vgl. US 2 757 184) als auch in Emulsion in einem Überschuß Wasser (vgl. DE 3 438 527 und DE 3 638 148) als Reaktionsmedium durchgeführt werden kann.

Hierzu wird das Basispolyisocyanat vor der Reaktion mit der entsprechenden Menge der Modifizierungskomponente vermischt. Falls die Modifizierungskomponente NCO-reak tiv ist, wie z.B. ein Polyether, Polyester oder makromolekulares Polyamin, wird sie vorzugsweise vor der Wasserreaktion mit dem Ausgangspolyisocyanat nach bekannten Methoden umgesetzt. Hierbei entstehen modifizierte Polyisocyanate mit Urethan-, Harnstoff- und/oder Amidgruppen, die ggf. auch noch nach bekannten Methoden in Allophanat-, Biuret- oder ähnliche Gruppen überführt werden können.

Es kann auch ein Gemisch aus dem Basispolyisocyanat und a) einer konzentrierten Lösung eines Modifizierungsmittels im Basispolyisocyanat oder b) dem nach bekannten Methoden hergestellten Umsetzungsprodukt aus Modifizierungsmittel und Basispolyisocyanat, welches ggf. nur eine geringe Menge des freien Basispolyisocyanats enthält, (z.B. gedünnschichtetes Prepolymer) eingesetzt werden. Es können auch nicht ausreagierte Gemische aus dem Basispolyisocyanat und der Modifizierungskomponente eingesetzt werden.

Ferner kann die Modifizierungskomponente anteilig oder vollständig im Reaktionsmedium (Wasser oder inertes Lösungsmittel) gelöst oder dispergiert eingesetzt werden und wird dann nach Zusatz des Basispolyisocyanats zum Reaktionsmedium während der Reaktion mit Wasser in das Polyisocyanat eingebaut.

Als Harnstoffgruppen-freie Ausgangspolyisocyanate können aliphatische, cycloaliphatische, araliphatische, aromatische und heterocyclische Polyisocyanate eingesetzt werden, wie sie z.B. von W. Siefken in Justus Liebigs Annalen der Chemie, 562 Seiten 75 bis 136, beschrieben werden; beispielsweise solche der Formel
Q(NCO)$_n$,
in der
n = 2-4, vorzugsweise 2,
und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,
bedeuten, z.B. Ethylen-diisocyanat, 1,4-Tetramethylendiisocyanat, 1-6-Hexamethylendiisocyanat, 1,12-Dodecandidiisocyanat, Cylobutan-1,3-diisocyanat, Cyclohexan-1,3-und-1,4-diisocynat sowie beliebige Gemische ihrer Stereo-Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebe Gemische dieser Isomeren, Hexahydro-1,3-und/oder -1,4-phenylendiisocyanat, Perhydro-2,4′-und/oder -4,4′-diphenylmethandiisocyanat, 1,3- und 1,4-Phenylendiisocyanat, 2,4- und 2,6-Toluylendiisocynat sowie beliebige Gemische dieser Isomeren, Diphenylmethan-2,4′- und/oder -4,4′- und/oder -2,2′-diisocyanat, Naphthylen-1,5-diisocynat.

Ferner kommen beispeilsweise erfindungsgemäß in Frage: Triphenylmethan-4,4′,4″-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, perchlorierte Arylpolyisocyanate, wie sie z.B. in der DE-Auslegeschrift 1 157 601 (US-Patentschrift 3 277 138) beschrieben werden, oder Norbornan-Diisocyanate gemäß US-Patentschrift 3 492 330.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Urethangruppen, Allophanatgruppen oder Isocyanuratgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4′- und/oder 2,4-und/oder 2,2′-Diphenylmethandiisocyanat ableiten. Insbesondere bevorzugt ist das Toluylen-2,4-diisocyanat.

Die Polyisocyanate können auch in Form einer (konzentrierten) Lösung in einem gegenüber den Polyisocyanaten inerten, mit Wasser nicht mischbaren Lösungsmittel, vorzugsweise aliphatischen oder aromatischen Kohlenwasserstoffen wie z.B. n-Hexan, Cyclohexan, Isooctan, Benzol, Toluol oder Xylol eingesetzt werden.

Als langkettige Modifizierungskomponente kommen insbesondere solche in Betracht, die einen gewissen polaren Charakter aufweisen:
Ein- oder mehrwertige höhermolekulare Verbindungen mit 1 bis 8, vorzugsweise 2 bis 4, Hydroxyl- oder Amingruppen, mit einem Molekulargewicht von etwa 400 bis 10.000, vorzugsweise 800 bis 6.000, insbesondere bevorzugt 1.000 bis 4.500.

Dies sind insbesondere 2 Hydroxylgruppen aufweisende Polyester, Polyether, Polythioether, Polyacetale, Polycarbonate, Polyacetone oder Polyesteramide, sowie auch Polybutadienverbindungen, wie sie für die Herstellung von homogenen, gegebenenfalls zellförmigen oder schaumstoffartigen Polyurethanen an sich bekannt sind. Besonders bevorzugt sind Polyether und Polyester.

Die in Frage kommenden Polyether sind solche der an sich bekannten Art und werden z.B. durch Polymerisation von Tetrahydrofuran oder von Epoxyden wie Ethylenoxyd, Propylenoxyd, Butylenoxyd, Styroloxyd oder Epichlorhydrin bzw. Anlagerung dieser Epoxydverbindungen, vorzugsweise von Ethylenoxyd oder -propylenoxyd, ggf. im Gemisch oder nacheinander, an Startkomponenten mit reaktionsfähigen Wasserstoffatomen wie Wasser, mehrwertige Alkohole, Ammoniak oder mehrwertige Amine oder Zucker hergestellt.

Die in Frage kommenden, Hydroxylgruppen aufweisenden Polyester sind z.B. Umsetzungsprodukte von mehrwertigen, vorzugsweise zweiwertigen, und ggf. zusätzlich drei- und mehrwertigen Alkoholen mit mehrwertigen, vorzugsweise zweiwertigen, Polycarbonsäuren oder deren Anhydriden oder entsprechenden Polycarbonsäureestern von niedrigen Alkoholen.

Die Polycarbonsäuren können aliphatischer, cycloaliphatischer, aromatischer, araliphatischer und/oder heterocyclischer Natur und ggf., z.B. durch Halogenatome, substituiert sein, sie können aber auch ungesättigt sein.

Als Beispiele für solche Carbonsäuren und deren Derivate seien genannt: Adipinsäure, Sebacinsäure, Azelainsäure, Dodecandisäure, Phthalsäure, Isophthalsäure, Tetrahydrophthalsäureanhydrid, Tetrachlorphthalsäureanhydrid, Endomethylentetrahydrophthalsäureanhydrid, Glutarsäureanhydrid, Maleinsäureanhydrid, Fumarsäure, dimerisierte und trimerisierte ungesättigte Fettsäuren, Terephthalsäuredimethylester und Terephthalsäure-bis-glykolester.

Als mehrwertige Alkohole kommen z.B.. Ethylengykol, Propandiol-1,2 und -1,3, Butandiol-1,4 und -2,3,Hexandiol-1,6, Decandiol-1,10, Neopentylglykol, 1,4-Bis-hydroxymethylcyclohexan, 2-Methyl-1,3-propandiol, Glycerin, in Frage.

Auch Polyester aus Lactonen, z.B. ε-Caprolacton, oder aus Hydroxycarbonsäuren, z.B. ω-Hydroxycapronsäure, sind einsetzbar, insbesondere wenn sie zusätzliche Komponenten, wie Diethylenglykol oder 1,4-Butandiol, enthalten, um ihre hohe Kristallinität zu mindern.

Als Polyacetale sind z.B. die aus Glykolen und Formaldehyd herstellbaren Verbindungen geeignet.

Als Hydroxylgruppen aufweisende Polycarbonate kommen solche der an sich bekannten Art in Betracht, z.B. die durch Umsetzung von Propandiol-1,3, Butandiol-1,4 und/oder Hexandiol-1,6, Di-, Tri- oder Tetraethylenglykol oder Thiodiglykol, mit Diarylcarbonaten, z.B. Diphenylcarbonat, oder Phosgen, hergestellt werden können.

Auch Hydroxylendgruppen aufweisende Polybutadiene sind erfindungsgemäß geeignet. Es· können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden, Verbindungen ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

Weitere Vertreter der genannten zu verwendeten Verbindungen sind z.B. in High Polymers, Vol. XVI, "Polyurethans, Chemistry and Technologie", verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, sowie in der DE-A 2 854 384 ausführlich beschrieben.

Es ist selbstverständlich möglich, Mischungen der o.g. Polyhydroxylverbindungen einzusetzen.

Als höhermolekulare Polyaminoverbindungen mit aromatischer Aminogruppen mit einem Molgewichtsbereich, wie für höhermolekulare Polyhydroxylverbindungen beschrieben, werden insbesondere solche Polyaminoverbindungen eingesetzt, wie sie durch Hydrolyse von entsprechenden NCO-Prepolymeren auf Basis der o.g. höhermolekularen Polyhydroxylverbindungen und überschüssigen aromatischen Diisocyanaten durch (vorzugsweise basische) Hydrolyse hergestellt werden können. Beispiele für dieses Verfahren werden in der DE-OS 2 948 419 ange geben. In der letztgenannten Patentschrift werden auch weitere Verfahren des Standes der Technik zur Herstellung von aromatischen Aminoverbindungen höhermolekularer Struktur genannt. Beispiele sind ferner die nach US-PS 2 888 439 zugänglich Aminopolyether.

Als höhermolekulare Polyaminoverbindungen mit aliphatischen Aminogruppen werden z.B. solche eingesetzt, wie sie durch reduktive Aminierung von Polyoxyalkylenglykolen mit Ammoniak nach BE-PS 634 741 und US-PS 3 654 370 erhalten werden. Weitere höhermolekulare Polyoxyalkylen-Polyamine können nach Methoden, wie sie in der Firmenschrift "Jeffamine, Polyoxypropylene Amines" von Texas Chemical Co., 1978, aufgezählt werden, hergestellt werden.

Diese Modifizierungskomponenten können auch in einer gegenüber den Isocyanaten inerten Form vorliegen, wie z.B. an den endständigen Hydroxyl-Gruppen veretherte, mit Monocarbonsäuren veresterte oder mit Monoisocyanaten urethanisierte Polyether oder Polyester oder Polyetheramine mit acetylierten Aminengruppen. Im allgemeinen werden aber die NCO-reaktiven Komponenten bevorzugt, weil sie bei der Herstellung oder Weiterreaktion der Harnstoffgruppen-haltigen Polyisocyanate in das Polyurethangerüst miteingebaut werden und deshalb keine Probleme durch Migration oder Ausschwitzen der Modifizierungskomponente verursachen.

Als Modifizierungskomponente werden bevorzugt Polyether oder Polyester eines Molekulargewichts von 400 bis 10.000, vorzugsweise 800 bis 6.000, eingesetzt. Besonders bevorzugt sind Polyether mit einem Molekulargewicht von 1.000 bis 4.500, die einen Gehalt an Ethylenoxideinheiten von 0 - 48 Gew.-%, besonders bevorzugt 5 - 25 Gew.-% aufweisen.

Das Modifizierungsmittel wird in einer Menge von > 0 bis 40 Gew.-%, bezogen auf Gesamtprodukt, vorzugsweise > 0 bis 15 Gew.-%, besonders bevorzugt 2 - 10 Gew.-% eingesetzt.

Die Umsetzung des modifizierten Ausgangspolyisocyannates mit Wasser und anschließende Isolierung des Produktes erfolgt nach bekannten, bereits an anderen Stellen beschriebenen Verfahren (s. US 2 757 184, DE 3 439 527). Diese Verfahren können i.a. ohne weitere Veränderungen für die Herstellung der modifizierten, Harnstoffgruppen enthaltenden Polyisocyanate eingesetzt werden.

Die modifizierten, Harnstoffgruppen enthaltenden Polyisocyanate unterscheiden sich, außer in dem zu erwartenden geringeren NCO-Gehalt, praktisch nicht von den unmodifizierten Produkten. Sie weisen aber, verglichen mit diesen, eine verbesserte Ankopplung und eine höhere Reaktionsgeschwindigkeit gegenüber NCO-reaktiven Verbindungen auf.

Der Gegenstand der vorliegenden Erfindung soll anhand der folgenden Beispiele näher erläutert werden.

Beispiel 1

Herstellung der mit langkettigen Komponenten modifizierten Ausgangspolyisocyanate

Allgemeine Vorschrift

Das Ausgangspolyisocyanat wird unter Stickstoff und unter Rühren bei ca. 60°C mit der angegebenen Menge der Modifizierungskomponente versetzt und die Mischung so lange bei ca. 60°C gerührt, bis der NCO-Gehalt nicht mehr weiter abnimmt (i.a. 2-3 h).

Tabelle I zeigt eine Übersicht über die hergestellten, modifizierten Ausgangspolyisocyanate.

Tabelle I

| Nr. | Ausgangspoly-isocyanat | Menge | Modifizierungskomponente | Menge | % NCO titr. | % be-rechnet |
|---|---|---|---|---|---|---|
| 1a | 2,4-Toluylen-diisocyanat | 707,4 | Polyether- PG 87% PO ⟵ 13% EO ⟵, MG 2000,     OH-Z 56<br>polyol | 42,6 | 44,01 | 45,32 |
| 1b | " | " | "    PG 65% PO ⟵ 35% EO ⟵, MG 2000,    OH-Z 56 | " | 45,18 | 45,32 |
| 1c | " | " | "    PG 85% PO ⟵ 15% EO ⟵, MG 4000,    OH-Z 28 | " | 44,32 | 45,44 |
| 1d | " | " | "    TMP 82,5 PO ⟵ 17,5% EO ⟵,    OH-Z 34 | " | 44,88 | 45,41 |
| 1e | " | " | "   wie Beispiel 1d, mit 20% Polymerfüll-stoff aus Acrylnitril/Styrol 3:2   OH-Z 28 | " | 45,19 | 45,44 |
| 1f | " | " | wie Beispiel 1d, mit 20%    OH-Z 28<br>Polyhydrazodicarbonamid | " | 45,41 | 45,44 |
| 1g | " | " | "   Glycerin 5,3% PO ⟵ 4,6% EO ⟵ ‖ 81,7%<br>PO ‖‖ 8,4% EO ⟵    OH-Z 35 | " | 45,31 | 45,41 |
| 1h | " | 728,7 | " )Gemisch aus 33,3 Gew% Polyether wie Beispiel | 21,3 | 46,54 | 46,82 |
| 1i | " | 707,4 | " )1 g und 66,7 Gew% Polyether $H_2O$/Trimethylol | 42,6 | 45,05 | 45,34 |
| 1j | " | 686,1 | " )propan 53:47 100% PO, OH-Zahl 56 | | | |
| | | | ⟵    Misch-OH-Z 50,1 | 63,9 | 43,22 | 43,87 |

EP 0 353 572 A2

T a b e l l e   I   (Fortsetzung)

| Nr. | Ausgangspoly-isocyanat | Menge | Modifizierungskomponente | Menge | % NCO titr. | % berechnet |
|---|---|---|---|---|---|---|
| 1k | 2,4-Toluylen-diisocyanat | 707,4 | Polyester aus Adipinsäure und Ethylenglykol, MG 2000 | 42,6 | 45,10 | 45,32 |
| 11 | " | " | Polyetherester 1)                                        OH-Zahl 89,0 | 42,6 | 44,96 | 45,18 |
| 1m | " | " | Hydroxypolyacrylat 2) Polyacrylat mit Hydroxypropyl-methacrylateinheiten, 60%ige Lösung in Xylol, OH-Zahl 45 | " | 42,58 | 45,32 |
| 1n | " | " | Polyether-polysiloxan-Blockcopolymer 3) | " | - | - |
| 1o | " | " | Polyamin Polypropylenglykol, MG 2000 mit aliphat. Aminendgruppen | " | 45,02 | 45,34 |
| 1p | Gemisch aus 80% 2,4- und 20% 2,6-Tolu-ylendiisocyanat | 728,7 | Polyether     wie Beispiel 1h | 21,3 | 46,43 | 46,82 |
| 1q | 4,4'-Diphenyl-methandiisocyanat | 707,4 | Polyether     wie Beispiel 1h | 42,6 | 31,32 | 31,48 |

PG = 1,2-Propylenglykol

EO = Ethylenoxid

|⟵⟶ = zweite Alkoxylierungsstufe

||| ⟵⟶ = vierte Alkoxylierungsstufe

2)  Desmophen A 160 der Bayer AG

PO = Propylenoxid

|| ⟵⟶ = Alkoxylierungsreaktion

|| ⟵ = dritte Alkoxylierungsstufe

1) aus 1 Mol Polypropylenglykol MG 1000 und 2 Mol Caprolactam, OH-Zahl 89,0

3) Stabilisator OS 50, Fa. Goldschmidt, Essen

Beispiel 2

Herstellung der mit langkettigen Komponenten modifizierten, Harnstoffgruppen enthaltenden Polyisocyanate nach dem "Wasser-Verfahren" aus den in Beispiel 1 hergestellten modifizierten Ausgangspolyisocyanaten.

Allgemeine Vorschrift

wäßr. Phase: 3500 ml Wasser
20 g einer Lösung aus 28,9 g Triethanolamin, 15 g Glycin und 134,4 g Wasser
12,5 g Dimethylbenzylamin org. Phase: 750 g des modifizierten Ausgangspolyisocyanates aus Beispiel 1
Die angegebene Wassermenge (vorzugsweise demineralisiertes Wasser) wird mit der angebenen Menge an Stabilisatorlösung und der angegebenen Katalysatormenge bei Raumtemperatur oder unter leichter Kühlung (ca. 15° C) in einem Becherglas geeigneter Größe homogen vermischt.
Danach wird die abgewogene Menge des Ausgangspolyisocyanats zugesetzt und die zweiphasige Mischung anschließend oder gleichzeitig mit einem Ultraturrax-Rührer (Typ T 45/N der Fa. IKA-Werk, Staufen im Breisgau mit Generator 45 G 6), ggf. unter Kühlung,(Temperaturder Mischung ca. 25-30° C) mit 10.000 Upm intensiv vermischt bis eine stabile Emulsion entstanden ist (i.a. ca. 3 minuten). Diese wird in einen Reaktionskolben mit Planschliffdeckel überführt und mit einem üblichen Blattrührer weitergerührt.
Die bei der allmählich beginnenden Reaktion eintretende $CO_2$-Entwicklung wird mit einer Gasuhr verfolgt. Nach Beendigung der $CO_2$-Entwicklung wird gegebenenfalls neutralisiert (z.B. mit 1 N HCl) und die entstandene Suspension abgesaugt, mit Wasser gewaschen und getrocknet.
Die Ausbeute ist nahezu quantitativ, da im Filterkuchen und im Filtrat praktisch kein nicht-umgesetztes Ausgangsisocyanat mehr vorhanden ist.
Tabelle II zeigt eine Übersicht über die nach dem Wasserverfahren aus den modifizierten Ausgangspolyisocyanaten des Beispiels 1 hergestellten Harnstoffgruppen enthaltenden Polyisocyanate.

Tabelle II

| Nr. | Ausgangspolyisocyanat | NCO-Gehalt des Produktes | Teilchenform |
|-----|----------------------|--------------------------|--------------|
| 2a | 1a | 21,46 Gew.-% | Kugeln 2-15 μm |
| 2b | 1b | 20,79 Gew.-% | Kugeln 2-12 μm |
| 2c | 1c | 21,50 Gew.-% | Kugeln 2- 8 μm |
| 2d | 1d | 20,93 Gew.-% | Kugeln 2- 8 μm |
| 2e | 1e | 21,62 Gew.-% | Kugeln 2- 8 μm |
| 2f | 1f | 20,11 Gew.-% | Kugeln 1-10 μm |
| 2g | 1g | 21,06 Gew.-% | Kugeln 1-10 μm |
| 2h | 1h | 22,85 Gew.-% | Kugeln 2-10 μm |
| 2i | 1i | 21,86 Gew.-% | Kugeln 1- 8 μm |
| 2j | 1j | 20,26 Gew.-% | Kugeln 1- 6 μm |
| 2k | 1k | 22,40 Gew.-% | runde Partikel 2-15 μm |
| 2l | 1l | 21,90 Gew.-% | runde Partikel 3-15 μm |
| 2m | 1m | 22,67 Gew.-% | Partikel 1-10 μm |
| 2n | 1n | 21,57 Gew.-% | Kugeln 2- 9 μm |
| 2o | 1o | 20,23 Gew.-% | Kugeln 1- 8 μm |
| 2p | 1p | 20,08 Gew.-% | Kugeln 1- 7 μm |

Beispiel 3

Herstellung der mit langkettigen Komponenten modifizierten Harnstoffgruppen enthaltenden Polyisocyanate nach dem "Lösungsmittel-Verfahren".

Beispiel 3 A

300 g des im Beispiel 1i hergestellten modifizierten Ausgangspolyisocyanates werden in 1850 ml Diisopropylether gelöst und bei Raumtemperatur unter Rühren mit 16,0 g Wasser versetzt. Nach 1,5 h Rühren bei Raumtemperatur und 2 h bei 40-50°C werden insgesamt 19,5 l $CO_2$ entwickelt. Das ausgefallene Produkt wird abgesaugt, mit Petrolether gewaschen und im Vakuumtrockenschrank bei 50°C getrocknet.
Ausbeute: 228,2 g ( = 82% d. Th.)
NCO : 24,93 (theor. 24,49)

Ein nach diesem Verfahren aus unmodifiziertem 2,4-Toluylendiisocyanat hergestelltes Produkt weist einen NCO-Gehalt von 25,7 - 26,1 Gew.-% auf.

Beispiel 3 B

150 g des im Beispiel 1g hergestellten modifizierten Ausgangspolyisocyanates werden in 800 g Aceton gelöst. 5,5 g Wasser werden in 50 g Aceton gelöst unter Rühren innerhalb 5 min zugetropft. Dann wird ca. 1 h bei Raumtemperatur und 4 h bei 40-60°C gerührt, wobei insgesamt 6,5 l $CO_2$ entweichen. Die erhaltene Suspension wird mit 500 ml Aceton verdünnt, abgesaugt, mit Petrolether gewaschen und im Vakuumschrank bei 50°C getrocknet.
Ausbeute: 111 g ( = 78% d. Th.)
NCO : 17,5 Gew.-% (theor. 16,09 Gew.-%, enthält noch freies 4,4'-Diphenylmethandiisocyanat)

Beispiel 4

Herstellung der modifizierten, Harnstoffgruppen enthaltenden Polyisocyanate nach dem "Wasser-Verfahren" aus einem Gemisch des unmodifizierten Ausgangspolyisocyanates mit der Modifizierungskomponente.

Es wird verfahren wie im Beispiel 2a. Anstelle des modifizierten Ausgangspolyisocyanates wird eine frisch hergestellte Mischung aus der Modifizierungskomponente und dem Ausgangspolyisocyanat eingesetzt.
NCO : 20,93 Gew.-%
Teilchenform: Kugeln 2-8 $\mu$m

Beispiel 5

Herstellung der modifizierten, Harnstoffgruppen enthaltenden Polyisocyanate nach dem "Wasser-Verfahren" unter Einsatz der Modifizierungskomponente in der wäßr. Phase.

wäßr. Phase: 3500 ml Wasser
42,6 g der im Beispiel 1i eingesetzten Modifizierungskomponente
20 g einer Lösung aus 28,9 g Triethanolamin, 15,0 g Glycin und 134,4 g Wasser
12,5 g Dimethylbenzylamin
org. Phase : 707,4 g 2,4-Touylendiisocyanat

Die Umsetzung wird wie in der allg. Vorschrift des Beispiels 2 angegeben durchgeführt.
NCO : 21,76 Gew.-%
Teilchenform: Kugeln 4-10 $\mu$m

Beispiel 6

Vergleich eines nach Beispiel 2i hergestellten modifizierten, Harnstoffgruppen enthaltenden Polyisocyanates mit dem entsprechenden unmodifizierten, Harnstoffgruppen enthaltenden Polyisocyanat in einem lagerstabilen Polyurethan-Reaktivsystem.

Das eingesetzte unmodifizierte Polyisocyanat wurde nach der allg. Vorschrift von Beispiel 2 hergestellt, wobei aber als org. Phase 750 g unmodifziertes 2,4-Toluylendiisocyanat eingesetzt wurden.
NCO-Gehalt: 23,5% NCO

| Zusammensetzung der Reaktivsysteme (Angaben in Gew-Tle) | | |
|---|---|---|
| | A erfindungsgemäß | B Vergleich |
| Polyetheramin[1] | 100 | 100 |
| T 403[2] | 0,25 | 0,23 |
| Polyisocyanat n. Beispiel 2i | 35,6 | - |
| unmodifiziertes Vergleichsprodukt | - | 33,1 |
| Aufdicktemperatur (s.u.) | 92° C | 95° C |

1) Polyoxypropylenglykolpolyether mit endständigen, aromat. gebundenen Amingruppen und einer NH-Zahl von 82,9, hergestellt nach DOS 2 948 419 durch Hydrolyse eines Präpolymers aus 1 Mol Polyoxypropylenglykol MG 1000 und 2 Mol 2,4 Touylendiisocyanat.
2) Jeffamine T 403 der Fa. Texaco Chemical Company, trifunktionelles Polyoxyalkylenamin, MG ca 400.

Herstellung und Prüfung der Reaktivsysteme

Das Polyetheramin wird zunächst mit T 403 und dann mit dem Harnstoffgruppen enthaltenden Polyisocyanat mit einem starken Rührer mit Zahnkranzrührscheibe intensiv vermischt und anschließend im Wasserstrahlvakuum entgast. Dann wird von der Abmischung nach dem in der DOS 3 230 757, S. 49 geschilderten Verfahren eine "Aufdicktemperatur" bestimmt und auf einer Metallgießform eine 20 x 20 x 0,3 cm³ große Probeplatte hergestellt (Aushärtung der flüssigen Mischung in 1 Stunde bei 150° C).
Tabelle III zeigt die mechanischen Werte der hergestellten Probeplatten.

Tabelle III

| Mechanische Werte der ausgehärteten Prüfplatten | | |
|---|---|---|
| | A | B |
| Zugfestigkeit (MPa) | 29 | 27 |
| 100% Modul DIN 53 504 (MPa) | 28,9 | 27 |
| Reißdehnung DIN 53 504 (%) | 200 | 100 |
| Weiterreißfestigkeit DIN 53 515 (kN/m) | 82 | 45 |
| Shore Härte DIN 53 505 | A:99 D:66 | A:98 D:63 |
| Elastizität DIN 53 512 (%) | 35 | 37 |

An der wesentlich verbesserten Reißdehnung und Weiterreißfestigkeit ist die verbesserte Ankopplung (polymerbildende Reaktionen zwischen Polyisocyanat und NCO-reaktiver Komponente) deutlich zu sehen.

Ansprüche

EP 0 353 572 A2

1) Mit langkettigen Komponten eines Molekulargewichts von 400 - 10.000 modifizierte, Harnstoffgruppen enthaltende Polyisocyanate.

2) Verbindungen gemäß Anspruch 1, dadurch gekennzeichnet, daß die langkettige Modifizierungskomponente mit einem Anteil bis 40 Gew.-% enthalten ist.

3) Verbindungen gemäß einem der Ansprüche 1 oder 2, dadurch gekennzeichnet, daß als langkettige Modifizierungskomponente Polyether und/oder Polyester im Molekulargewichtsbereich von 800 - 6.000 vorliegen.

4) Verfahren zur Herstellung der Verbindungen gemäß einem der Ansprüche 1 bis 3, dadurch gekennzeichnet, daß man Harnstoffgruppen-freies Polyisocyanat in einem inerten Reaktionsmedium oder in einer wäßrigen Phase, die einen Dispersionsstabilisator enthält, gegebenenfalls in Gegenwart eines Emulgators und/oder Katalysators mit Wasser unter Bildung von Harnstoffgruppen umsetzt, wobei man das Ausgangspolyisocyanat vor der Reaktion mit dem Wasser mit der langkettigen Komponente vermischt oder umsetzt und/oder die langkettige Komponente dem inerten Reaktionsmedium oder dem Wasser zusetzt.

5) Verwendung der Verbindungen gemäß einem der Ansprüche 1 - 3 zur Herstellung von Polyurethanen und/oder Polyharnstoffen.

11